# EUROPEAN PATENT SPECIFICATION

(11) **EP 2 957 977 B1**
(45) Date of publication and mention of the grant of the patent: **31.01.2018**
(21) Application number: 14461541.6
(22) Date of filing: 20.06.2014
(51) Int. Cl.: G05D 1/10, B64C 39/10, B64D 5/00

(54) **Method and system for compensation of an asymmetric configuration of an all-wing carrier for flying units**
Verfahren und System zur Kompensation einer asymmetrischen Konfiguration eines Nurflügelträgers für Flugeinheiten
Procédé et système de compensation d'une configuration asymétrique d'un porteur toute voilure pour unités volantes

(43) Date of publication of application: 23.12.2015
(73) Proprietor: Patents Factory Ltd. Sp. z o.o., 65-043 Zielona Gora (PL)
(72) Inventor: Paczkowski, Jacek, 65-043 Zielona Gora (PL); Nalewa, Tomasz, 65-043 Zielona Gora (PL); Kramek, Krzysztof, 65-043 Zielona Gora (PL)
(74) Representative: Kancelaria Eupatent.pl Sp. z.o.o

(56) References cited:
- EP-A2- 1 364 872
- US-A1- 2008 208 398
- US-A1- 2009 294 573

## Description

### TECHNICAL FIELD

The object of the invention is a method and a system for compensation of an asymmetric configuration of an all-wing carrier for flying units.

### BACKGROUND

There are known flying units of all-wing type. They usually resemble a single wing of an aircraft that comprises its own propelling means. Such flying units have several advantages, the main of which is a relatively low mass. This, in consequence, results in low fuel or energy consumption and low manufacturing costs when compared to classic flying units. The all-wing type units can be in form of UAVs (Unmanned Aerial Vehicles), which further emphasizes these advantages, and also eliminates the risk of death of the pilot.

The PCT application WO2001058756 discloses an aircraft of "all-wing" type, the flight of which can be controlled by controlling the thrust of its engines. Such steering method can allow for the lower overall mass of the aircraft, as well as less complicated construction.

There is also known a use of all-wing type units as a carrier for other, smaller UAVs with own propelling means. In such instance, these small UAVs are called 'parasites' and are connected for example to the lower surface of the carrier, so that they can be easily detached when necessary. When connected, they do not need to be propelled, as they rely on the carrier for transportation. Steering of a carrier with parasites is not different than steering of a carrier without parasites. However, this is a case only when there is a symmetric configuration of parasites with respect to the main axis of the carrier. When one or more of the parasites disconnect, configuration may change into an asymmetric one, posing therefore non-uniform drag resulting in an imbalance which may be hard to overcome through traditional steering means.

The US application US2009294573A1 discloses a system for reconnaissance using autonomous unmanned airborne vehicles (UAV). The system comprises a mothership, which is generally a fixed wing fuel tank capable of providing a suitable surface for flight (lift) and one or more elements for attachment of individual UAVs. The system further comprises one or more UAVs that are detachably connected to the mothership, and which are independently controllable for reconnaissance and tracking.

There is a need to provide a method and a system for compensation of an asymmetric configuration of an all-wing carrier for flying units that would not overly compromise its low energy or fuel consumption and structural simplicity.

### SUMMARY

There is presented a method for compensating an asymmetric configuration of parasite flying units on an all-wing carrier aircraft, comprising the steps of: determining the non-compensated parasite; reading the drag value of the non-compensated parasite; selecting a parasite for effecting the compensation; activating drag producing means on selected parasite to compensate the drag of the non-compensated parasite.

Preferably, the compensation is effected by extending the air brakes or opening the split flaps of the selected parasite.

Preferably, the method further comprises selecting at least two parasites to effect the drag compensation.

Preferably, the drag value of the non-compensated parasite is determined using a gyroscope.

Preferably, the drag value of the non-compensated parasite is determined using tensometric sensors.

Preferably, the method further comprises selecting, for effecting the compensation, the parasite that is the farthest from the axis of the plane.

There is also disclosed a system for compensating an asymmetric configuration of parasite flying units on an all-wing carrier aircraft, the system comprising a controller configured to: determine the non-compensated parasite; read the drag value of the non-compensated parasite; select a parasite for effecting the compensation; send a control signal to the selected parasite to activate drag producing means on said selected parasite to compensate the drag of the non-compensated parasite.

### BRIEF DESCRIPTION OF DRAWINGS

Further details and features of the present invention, its nature and various advantages will become more apparent from the following detailed description of the preferred embodiments shown in a drawing, in which:
Fig. 1 shows an all-wing flying unit in perspective view from above.
Fig. 2 shows an all-wing flying unit in perspective view from below.
Fig. 3 shows an all-wing flying unit in front view with all the parasites.
Fig. 4 shows an all-wing flying unit in front view with one parasite detached.
Figs. 5-6 show an all-wing flying unit in a view from below with one parasite detached.
Fig. 7 shows the steps of a method according to the invention.
Fig. 8 shows a system according to the invention.

### DETAILED DESCRIPTION

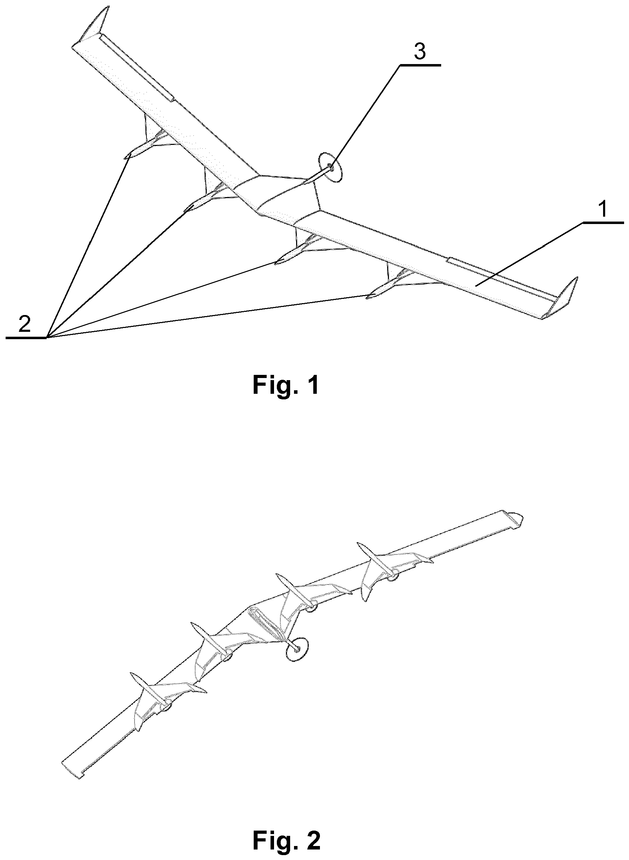

Figs. 1, 2 and 3 show an all-wing flying unit in perspective view from above, from below and in front view, respectively. The flying unit is propelled by a single engine 3 located in the center. The parasites (small UAVs) are connected under a wing 1 of the carrier, substantially in a symmetric configuration with respect to its longitudinal axis. In this case, there are two parasites on the left side and two parasites on the right side of the carrier. Such an arrangement results in a uniform drag distribution. Other configurations with different number of parasites are also possible.

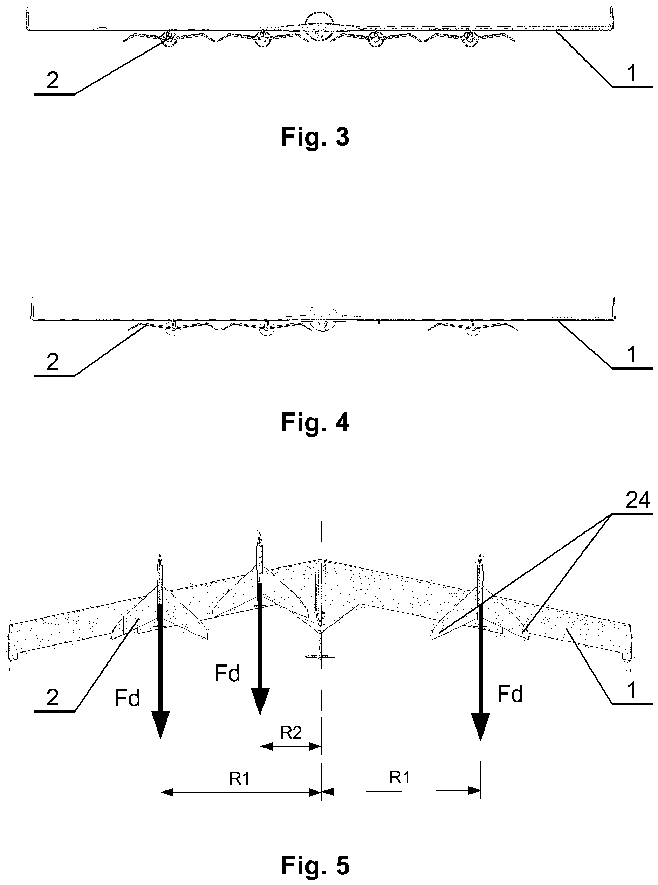

Figs. 4-6 show the same carrier wherein one of the parasites has been detached. There are therefore three parasites left, two on the right side and one on the left side. None of the parasites has an activated propelling means. Such asymmetric arrangement causes an non-uniform drag distribution of the carrier (less drag on the side from which parasite has been detached), which results with torque that is hard to compensate effectively only with the carrier's engine and/or rudder or ailerons.

The parasites are at the distance from the longitudinal axis of the carrier - two outer parasites are each at the distance R1, and the inner parasite is at the distance R2. As it can be seen, one of the inner parasites has been detached. There are also shown vectors of drag force acting on the parasites. The torque caused by the drag force of each parasite can be easily calculated, taking into account the distance R1 or R2 and the value of the drag force.

The asymmetric configuration of the parasites can be compensated by activating drag producing means 24 on selected parasites so as to increase drag. The embodiments have been described with respect to utilization of air brakes and/or split flaps. It will be however obvious that any known drag producing means can be utilized analogically (e.g. other drag producing flight control surfaces). Activation of drag producing means can be understood here as selecting a degree of extension of air brakes or opening of split flaps. As a result, the twisting action on the plane can be effectively eliminated.

The parasites are connected to the carrier through electric connections so as to allow the carrier to send control signals to the parasites. The controller 21 in the carrier can extend the air brakes or open the split flaps of a parasite. It can also regulate degree of extension of air brakes or opening of split flaps. It is therefore possible to create the arrangement of flight control surfaces such that it will compensate the non-uniform drag as stated above.

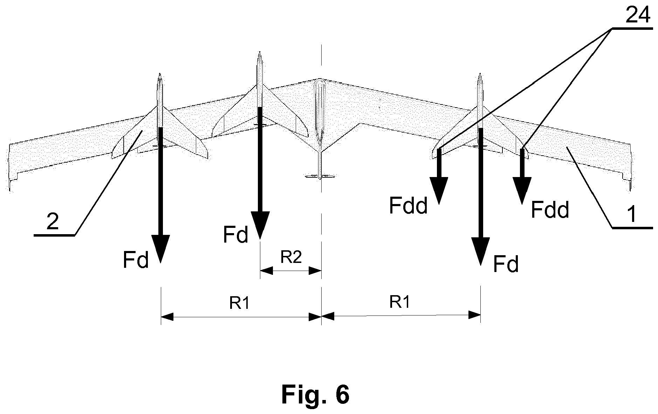

Assuming that one of the inner parasites 2 has been detached, as shown in Figs. 5 and 6, the drags generated by the outer parasites 2 are compensated by each other. On the other hand, the drag from the inner parasite 2 is not compensated. The controller 21 of the carrier can detect such a condition and send a control signal to extend the air brakes or open the split flaps of selected parasites which in result will essentially neutralize its detrimental effect to the carriers lift-to-drag ratio. Fd is the determined drag force caused by a parasite. Fig. 6 shows a carrier wherein one of the parasites is effecting the compensation. The outer parasite on the side, where there is less parasites, has extended its air brakes or opened its split flaps. Fdd is a drag created by the air brakes and/or split flaps. Based on the value of drag Fd to be compensated, the degree of extension of the air brakes or opening of the split flaps is set so as to compensate it.

In case when there are more parasites on the side of the carrier that will be effecting the compensation, it would be preferable to effect it through the parasite farthest from the longitudinal axis of the carrier.

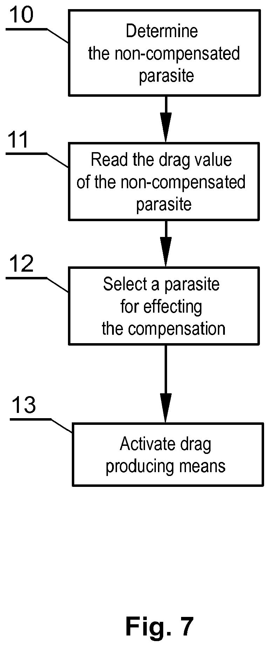

Figure 7 shows the steps of a method according to the invention. First, the parasite that is not compensated (due to detachment of its corresponding parasite from the other side of the aircraft) is determined in step 10. Next, the drag value of said non-compensated parasite is read 11, for example from its corresponding sensors. After that, in step 12, there is selected a parasite for effecting the compensation. It can be selected for example with the criterion of lowest energy consumption. It can be achieved through selecting the farthest located parasite (relative to the symmetry axis of the carrier) eligible for compensating. Finally, in step 13, the selected parasite (or parasites, as more than one can be selected for compensation) activates its drag producing means, i.e. extends the air brakes or opens the split flaps, which will compensate the drag of the non-compensated parasite.

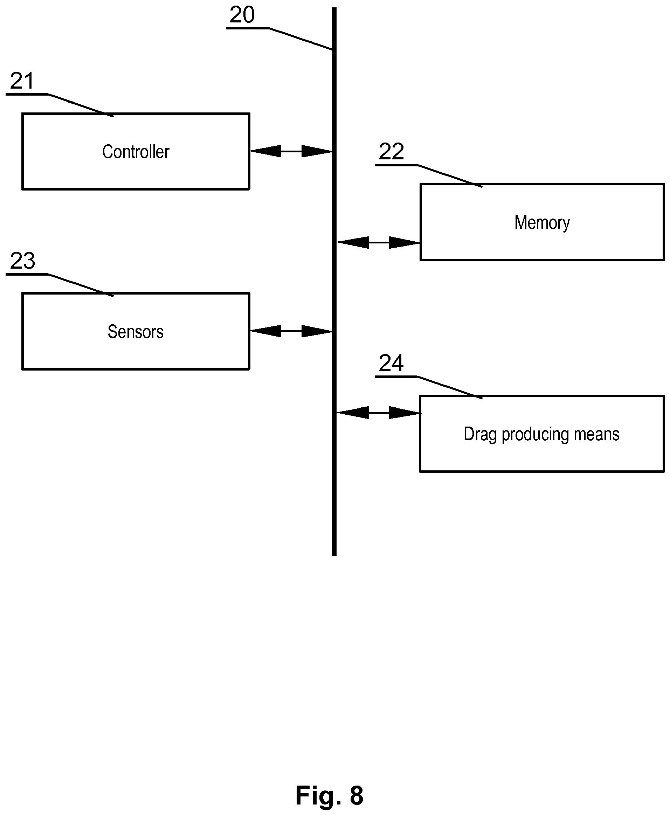

Figure 8 shows a system for compensation of an asymmetric configuration of an all-wing carrier for flying units. The system comprises a controller 21. The controller 21 is configured to execute software that allows for compensation of an asymmetric configuration using steps of the method described above. The system comprises a data bus 20 for communicating, preferably bi-directionally, all circuits and/or elements of the system. Further, the system comprises a memory 22 for storing required software for the controller 21 and any temporary data needed for operation of the system.

There are several ways to determine the degree of extension of the air brakes or opening of the split flaps of chosen parasite. One of them is the use of sensors 23, for example sensitive gyroscope sensors. Extension of the air brakes or opening of the split flaps of the parasites should be effected so as to cause the gyroscope to indicate the value equal or close to 0 (in the longitudinal axis of the carrier). Other solution is to install tensometric sensors on the pylons and measure the force acting upon them. When extension of the air brakes or opening of the split flaps of selected parasite compensates drag of a given parasite, the tensometric sensors should indicate increased drag to the level compensating summary drag on opposite wing. Alternatively, the forces can be measured throughout the whole aircraft (on carrier alone or together with parasites). The controller 21 is communicatively connected to the air brakes or the split flaps of selected parasite so as to control their degree of extension or opening based on the information provided from sensors 23.

The controller 21 can use a PID regulator to control the air brakes or the split flaps of selected parasite based on the measurement from the gyroscope sensor.

Alternatively, the controller 21 can use a PID controller 21 to control the air brakes or the split flaps of selected parasite based on the force set on the pylon and the force measured on the pylon.

An intelligent control implementing fuzzy logic can be utilized as well.

The method according to the invention can be utilized in pilotable manned or unmanned aircraft carriers carrying pilotable manned or unmanned parasite aircrafts. At least until the deployment of the parasites, the pilot of the carrier should have full control over the parasites, as stated above.

The method according to the invention can be utilized to compensate a malfunction of flight control surfaces of the carrier. In such case, the parasites either will support the maneuver effected by the carrier using its remaining, functioning flight control surfaces or the parasites will effect the maneuver alone.

Normally, the planes are symmetric with respect to their longitudinal axis and maintain their aerodynamic configuration the whole time. However, carrying deployable, small aircrafts makes the asymmetric configuration inevitable. Such asymmetry ought to be compensated. In this solution, the parasites with their components are treated as integral parts of the system that can be utilized at will as long as they are connected, even though such state is only temporary. The compensation could be carried out by the pilot or the system using common means and techniques known in the art. This however would compromise the simplicity and weight of the carrier, which preferably should be as light and as simple construction-wise as possible after releasing most or all of the parasites. Another advantage of present invention is flexibility in terms of possible applications, as it can be easily utilized to compensate almost every configuration of parasites with respect to the carrier.

The above discussion is a simplification and idealization of flying, with the assumption of preferable, moderate flight conditions.

## Claims

1. A method for compensating an asymmetric configuration of parasite flying units on an all-wing carrier aircraft, **characterised in that** it comprises the steps of:
- determining (10) the non-compensated parasite (2);
- reading (11) the drag value of the non-compensated parasite (2);
- selecting (12) a parasite for effecting the compensation;
- activating (13) drag producing means (24) on selected parasite to compensate the drag of the non-compensated parasite (2).

2. The method according to claim 1, wherein the compensation is effected by extending the air brakes or opening the split flaps of the selected parasite (2).

3. The method according to claim 1, comprising selecting at least two parasites (2) to effect the drag compensation.

4. The method according to any of previous claims, wherein the drag value of the non-compensated parasite (2) is determined using a gyroscope.

5. The method according to any of previous claims, wherein the drag value of the non-compensated parasite (2) is determined using tensometric sensors.

6. The method according to any of previous claims, comprising selecting, for effecting the compensation, the parasite (2) that is the farthest from the axis of the plane.

7. A system for compensating an asymmetric configuration of parasite flying units on an all-wing carrier aircraft, the system comprising a controller (21) configured to:
- determine the non-compensated parasite (2);
- read the drag value of the non-compensated parasite (2);
- select a parasite (2) for effecting the compensation;
- send a control signal to the selected parasite to activate (13) drag producing means (24) on said selected parasite (2) to compensate the drag of the non-compensated parasite (2).

## Patentansprüche

1. Verfahren zur Kompensation einer asymmetrischen Konfiguration von parasitären Flugeinheiten an einem Nurflügelträgerluftfahrzeug, **dadurch gekennzeichnet, dass** es die folgenden Schritte umfasst:
- Bestimmen (10) des nicht kompensierten Parasiten (2);
- Ablesen (11) des Widerstandswerts des nicht kompensierten Parasiten (2);
- Auswählen (12) eines Parasiten zum Bewirken der Kompensation;
- Aktivieren (13) einer widerstanderzeugenden Vorrichtung (24) an dem ausgewählten Parasiten, um den Widerstand des nicht kompensierten Parasiten (2) zu kompensieren.

2. Verfahren nach Anspruch 1, wobei die Kompensation durch Ausfahren der Luftbremsen oder Öffnen der Spreizklappen des ausgewählten Parasiten (2) bewirkt wird.

3. Verfahren nach Anspruch 1, umfassend das Auswählen von mindestens zwei Parasiten (2) zum Bewirken der Widerstandskompensation.

4. Verfahren nach einem der vorhergehenden Ansprüche, wobei der Widerstandswert des nicht kompensierten Parasiten (2) unter Verwendung eines Gyroskops bestimmt wird.

5. Verfahren nach einem der vorhergehenden Ansprüche, wobei der Widerstandswert des nicht kompensierten Parasiten (2) unter Verwendung von tensometrischen Sensoren bestimmt wird.

6. Verfahren nach einem der vorhergehenden Ansprüche, umfassend das Auswählen des Parasiten (2), der am weitesten von der Achse des Flugzeugs entfernt ist, zum Bewirken der Kompensation.

7. System zur Kompensation einer asymmetrischen Konfiguration von parasitären Flugeinheiten an einem Nurflügelträgerluftfahrzeug, wobei das System eine Steuerung (21) umfasst, die für Folgendes konfiguriert ist:
- Bestimmen des nicht kompensierten Parasiten (2);
- Ablesen des Widerstandswerts des nicht kompensierten Parasiten (2);
- Auswählen eines Parasiten (2) zum Bewirken der Kompensation;
- Senden eines Steuersignals an den ausgewählten Parasiten, um eine widerstanderzeugende Vorrichtung (24) an dem ausgewählten Parasiten (2) zu aktivieren (13), um den Widerstand des nicht kompensierten Parasiten (2) zu kompensieren.

## Revendications

1. Procédé permettant de compenser une configuration asymétrique d'unités volantes parasites sur un aéronef porteur de type « aile volante », **caractérisé en ce qu'**il comprend les étapes de :
- détermination (10) du parasite (2) non compensé;
- lecture (11) de la valeur de traînée du parasite (2) non compensé;
- sélection (12) d'un parasite permettant d'effectuer la compensation ;
- activation (13) d'un moyen de production de traînée (24) sur un parasite sélectionné pour compenser la traînée du parasite (2) non compensé.

2. Procédé selon la revendication 1, ladite compensation étant effectuée en étendant les aérofreins ou en ouvrant les volets d'intrados du parasite sélectionné (2).

3. Procédé selon la revendication 1, comprenant la sélection d'au moins deux parasites (2) pour effectuer la compensation de traînée.

4. Procédé selon l'une quelconque des revendications précédentes, ladite valeur de traînée du parasite (2) non compensé étant déterminée à l'aide d'un gyroscope.

5. Procédé selon l'une quelconque des revendications précédentes, ladite valeur de traînée du parasite (2) non compensé étant déterminée à l'aide de tensiomètres.

6. Procédé selon l'une quelconque des revendications précédentes, comprenant la sélection, pour effectuer la compensation, du parasite (2) qui est le plus éloigné de l'axe de l'aéronef.

7. Système permettant de compenser une configuration asymétrique d'unités volantes parasites sur un aéronef porteur de type « aile volante », ledit système comprenant un dispositif de commande (21) conçu pour :
- déterminer le parasite (2) non compensé ;
- lire la valeur de traînée du parasite (2) non compensé ;
- sélectionner un parasite (2) permettant d'effectuer la compensation ;
- envoyer un signal de commande au parasite sélectionné pour activer (13) un moyen de production de traînée (24) sur ledit parasite (2) sélectionné afin de compenser la traînée du parasite (2) non compensé.
